# NEUE EUROPÄISCHE PATENTSCHRIFT

(11) **EP 2 468 545 B2**
(45) Veröffentlichungstag und Bekanntmachung des Hinweises auf die Entscheidung über den Einspruch: **25.07.2018**
(45) Hinweis auf die Patenterteilung: 25.03.2015
(21) Anmeldenummer: 11009872.0
(22) Anmeldetag: 15.12.2011
(51) Int. Cl.: B60J 7/06, B60J 7/12

(54) **Faltverdeck für ein Fahrzeug mit einem Spannbügel**
Tensioning bow for a foldable vehicle roof
Arceau de tension pour un toit pliable de véhicule

(30) Priorität: 24.12.2010 DE 102010056247
(43) Veröffentlichungstag der Anmeldung: 27.06.2012
(73) Patentinhaber: Magna Car Top Systems GmbH, 74321 Bietigheim-Bissingen (DE)
(72) Erfinder: Katrini, Waleri, 01257 Dresden (DE); Papendorf, Marcus, 74357 Bönnigheim (DE); Klein, Berthold, 74343 Sachsenheim (DE); Liebhardt, Randolf, 71120 Grafenau (DE)
(74) Vertreter: Völger, Silke Beatrix

(56) Entgegenhaltungen:
- EP-A2- 2 210 754
- WO-A1-2009/000226
- DE-A1- 10 359 513
- DE-A1- 19 731 330
- DE-A1- 19 731 330
- DE-A1-102004 020 757
- DE-A1-102004 020 757
- DE-A1-102008 036 632
- DE-B4- 19 604 855
- DE-C1- 4 129 493
- DE-C2- 19 638 846
- US-A- 2 694 598
- Renz, Sebastian, "Fiat 500 C-Fahrbericht" 06.09.2009, ¬gefunden 09.11.2015| Fundstelle: ¬http://www.auto-motor-und-sport.de/fahrber ichte/fiat-500-c-fahrbericht-1346431.html|

## Beschreibung

Die vorliegende Erfindung betrifft ein Fahrzeug, mit den Merkmalen des Oberbegriffs des Anspruchs 1, gemäß der US 694598 B1.

Es sind Fahrzeuge mit zu öffnenden und zu schließenden Dächern bekannt, bei denen das Dach im Wesentlichen von einem Faltverdeck gebildet wird und bei geöffnetem Faltverdeck im Heckbereich des Fahrzeugs zusammengefaltet abgelegt wird. Ein derartiges Faltverdeck wird in der Regel beginnend aus dem Bereich des Windschutzscheibenrahmens entgegen der Fahrtrichtung des Fahrzeuges nach hinten geöffnet, wobei es selbstverständlich möglich ist, dass ein derartiges Faltverdeck auch von hinten beginnend in Fahrtrichtung nach vorne geöffnet werden kann. Derartige Faltverdecke verschließen in der Regel eine entlang des Daches bis in den Heckbereich ragende Dachöffnung, wobei es selbstverständlich auch möglich ist, dass Teile des Faltverdecks zumindest teilweise über seitliche Bereiche der Karosserie ragen können.

Zur Formgebung und Stabilisierung sind derartige Faltverdecke mittels quer zur Fahrtrichtung angeordneten Spriegeln unterhalb des Faltverdeckes versehen, die ein Durchhängen oder ein Flattern des Verdeckstoffes während der Fahrt verhindern. Bei Faltverdecken, die nicht nur im horizontalen, den Fahrgastraum überspannenden Dachbereich angeordnet sind, sondern über Eckspriegel umgelenkt in den Heckbereich des Fahrzeuges verlängert sind, sind in der Regel Heckscheiben aus einem transparenten Material in das Faltverdeck integriert. Diese können in den Öffnungsbereich des Verdeckstoffes eingeklebt, eingenäht oder in sonstiger Weise befestigt sein. Den hinteren, nahe der Karosserie abschließenden Bereich, wird in der Regel durch einen Spannbügel gebildet, wobei der Spannbügel überwiegend fest an der Karosserie angebracht ist. Bei bestimmten Ausführungen ist es auch möglich, dass der Spannbügel schwenkbar an der Karosserie befestigt ist, wobei der Spannbügel U-förmig als dünner Spriegel ausgebildet ist. Eine derartige Lösung wird immer dann angestrebt, wenn der zur Befestigung des Verdeckstoffes im Heckbereich zur Verfügung stehende Bauraum relativ gering ausgebildet ist. Auch ist es möglich, dass der Verdeckstoff im Heckbereich direkt an der Karosserie, beziehungsweise in einem in der Karosserie vorhandenen Aufnahmeraum, befestigt sein kann. Derartige Faltverdecke werden beim Öffnen entlang den Dachführungen verschoben, wobei zur Faltenbildung des Faltverdecks Vorrichtungen wie beispielsweise Lenker oder Faltspriegel vorhanden sein können. Diese werden bei geöffnetem Faltverdeck zusammen mit dem Verdeckstoff gefaltet im Heckbereich des Fahrzeuges abgelegt.

Aus der DE 197 31 330 A1 ist ein Verdeck für ein Fahrzeug bekannt, das ausgehend von einem vorderen Windschutzquerträger sich bis an B-Säulen des hinteren Bereichs eines Fahrzeugs erstreckt, wobei zwischen dem Windschutzquerträger und den B-Säulen schwenkbare, bzw. herausnehmbare Dachholme zur Führung eines Schiebefaltbezugs vorgesehen sind. Hierbei sind die Dachholme, bei schwenkbarer Ausführung, über Gelenke an den B-Säulen bewegbar befestigt und können in Richtung des Fahrgastinnenraums geschwenkt werden. Der Schiebefaltbezug kann je nach Wunsch in Fahrzeuglängsrichtung, ausgehend von dem Windschutzquerträger entgegen der Fahrtrichtung, oder von seiner hinteren Begrenzung ausgehend, auf den Windschutzquerträger zu verschoben werden.

Im hinteren Bereich des Fahrzeugs, ist von den seitlichen B-Säulen ausgehend ein hinter die B-Säulen ragender fester Dachrahmen eingebaut, an dem ein vorderes Ende eines Heckbezugs befestigt ist und der Heckbezug im Heckbereich, nahe der Karosserieöffnung, an der Karosserie befestigt ist. Die karosserieseitige Befestigung ist vorteilhaft mittels eines Spannbügels ausgeführt, wobei der Spannbügel U-förmig ausgebildet ist und mit seinen freien Enden schwenkbar im unteren Bereich der B-Säule gelagert ist. Somit ist es möglich, dass der Spannbügel in Richtung des Dachrahmens geschwenkt werden kann. Der Heckbezug wird hierbei im Heckbereich und mit seinen Seitenbereichen entsprechend gefaltet, wobei der wesentliche, zur B-Säule weisende Anteil des Heckbezugs mit der B-Säule fest verbunden verbleibt. Bei geschlossenem Heckbezug liegt der Heckbezug über den Spannbügel und der Hinterkante der B-Säule verlaufend an, wobei dieser bis in die Ecke zwischen Spannbügel und B-Säule gespannt wird. Der Heckbezug verläuft somit den Heckbereich und die seitlichen hinteren Heckbereiche umgreifend und wird bei vollständig geöffnetem Verdeck im hinteren unteren Bereich der Karosserie abgelegt. Es kann somit der Eindruck eines Cabrio-Verdecks entstehen, obwohl der Schiebefaltbezug und der Heckbezug durch einen Dachrahmen voneinander getrennt ausgeführt sind.

Des Weiteren ist aus der gattungsgemäßen DE 10 2004 020 757 A1 ein Faltverdeck eines Kraftfahrzeugs bekannt. Hier ist ein heckseitiger Verdeckbezug vorgesehen, der einerseits an einer Dachkassette und andererseits an einem unteren Spannbügel gehalten ist. Weiterhin ist ein vorderes Faltdach vorgesehen. In der Öffnungsstellung kann das Faltdach in der Dachkassette gelagert werden.

Die DE 101 04 522 C1 beschreibt ein öffnungsfähiges Dachelement das aus einer ein Fahrzeugdach verschließenden Stellung in eine Offenstellung des Fahrzeugdach verschoben werden kann und in geöffneter Stellung in einer Dachkassette aufgenommen wird. Diese Verschiebbarkeit des Fahrzeugdachs betrifft im Wesentlichen eine horizontale Dachöffnung, wobei sich der hintere heckseitige Bereich zwischen dem oberen Dachbereich und der Oberkante der Karosserieöffnung erstreckt. Seitlich nach vorne wird der heckseitige Bereich von festen Seitenteilen in Form von schwenkbaren C-Säulen begrenzt, wobei diese nicht den gesamten hinteren seitlichen Bereich bilden. Der Eckbereich wird hierbei durch einen Verdeckstoff abgebildet, der das Seitenteil und den Heckbereich überspannt. Die in Fahrtrichtung weisende Begrenzung des Seitenteils wird durch ein Trägerelement gebildet, das Bestandteil der C-Säule ist. Mittels dieser Trägerelemente wird zum vollständigen Öffnen des Fahrzeugdachs die Kassette in den Heckbereich der Karosserie geschwenkt. Der Verdeckstoff des Faltverdecks ist hierbei am Seitenteil fest angebracht und bildet im Öffnungsbereich der Karosserie eine stoffbespannte Ecke ab. Im oberen Bereich ist der Verdeckstoff an der Kassette befestigt, wobei der Eckbereich durch den über den unteren und oberen Eckverlauf gespannten Verdeckstoff gebildet wird.

Beim Öffnen des hinteren Verdeckbereichs werden die Seitenteile um nahe der Kassette positionierte Schwenkachsen zur Fahrzeugmitte hin geschwenkt, so dass die Seitenteile, der Verdeckstoff und die Kassette zusammen in den Öffnungsbereich der heckseitigen Karosserie geschwenkt werden können. Bei vollständig geöffnetem Faltverdeck entsteht ein Cabrio-Verdeck, bei dem das Heckteil und das aus Verdeckstoff gebildete Dachelement vollständig in den Karosseriebereich abgesenkt und aufgenommen sind.

In der DE 10 2004 020 007 A1 ist ein Kraftfahrzeug mit einem zumindest bereichsweise zu öffnenden Dach beschrieben, bei dem im Dachbereich, ausgehend vom oberen Windschutzscheibenrahmen bis in den Bereich der C-Säulen, ein öffnungs- und schließfähiges Dach aus festen plattenförmigen Dachteilen vorgesehen ist. Der zu öffnende und zu schließende Heckbereich des Kraftfahrzeugs wird durch einen flexiblen Bezug abgedeckt, wobei dieser zum vorderen Dachbereich hin an einem Spriegel befestigt ist. Im rückseitigen Bereich der C-Säulen ist der flexible Bezug an seitlichen, den Spriegel verlängernden Schenkeln angebracht. Diese Schenkel sind bei geschlossenem Heckbereich fest an den C-Säulen anliegend, wobei zur raumsparenden Ablage die Schenkel etwa in mittiger Lage ein Gelenk aufweisen. Der Heckbereich kann bei sich öffnenden Dach zusammengefaltet und im unteren Heckbereich der Karosserie abgelegt werden.

Die GB 360 415 zeigt ein Fahrzeug mit einem Faltverdeck, das in einer Vielzahl von Stufen geöffnet bzw. geschlossen werden kann. Im Bereich der Seitenscheiben ist im Dach des Fahrzeugs eine Dachöffnung vorhanden, wobei der Bereich zwischen den Seitenscheiben und der Dachöffnung als ein Dachträger zur Aufnahme von Führungsschienen ausgebildet ist. Ein flexibler Verdeckstoff lässt sich, beginnend von der Windschutzscheibe an bis nahe an den Heckbereich der C-Säulen zurückschieben. Anschließend zu den C-Säulen sind keine Dachträger vorhanden, da dieser Bereich von einer haubenartigen, aus Verdeckstoff bestehenden Abdeckung abgeschlossen wird. Hierbei zieht sich der Verdeckstoff vom Heckbereich über die heckseitigen Seitenbereiche bis an die C-Säule reichend entlang, mit der der Verdeckstoff dichtend abschließt.

Über einen U-förmigen Spriegel, der mit seiner quer zur Fahrtrichtung nach vorne weisenden Kante an der C-Säule aufliegt und an dem heckseitig der Verdeckstoff des Heckbereichs befestigt ist, kann der Verdeckstoff zusammen mit dem nach hinten verschobenen Verdeckstoff in den hinteren Abschlussbereich der Karosserie geschwenkt werden. Der Spriegel entspricht im Kontaktbereich in seiner Formgebung der C-Säule, so dass dieser außer zur Aufbringung der Stoffspannung des Heckbereichs zur Abdichtung der C-Säule dient. Der Verdeckstoff des Heckbereichs ist im Öffnungsbereich der Karosserie fest mit dieser verbunden. Durch den Spriegel werden die heckseitige Form und der Verlauf des Verdeckstoffs nicht vorgegeben, sondern nur in gespannter Position gehalten.

Bei geschlossenem Faltverdeck entsteht der Eindruck, dass es sich bei diesem Fahrzeug um ein Teil-Cabriolet bzw. um ein Landaulet handelt.

Die vorliegende Erfindung beschäftigt sich mit dem Problem, ein Fahrzeug mit einem Faltverdeck umfassend einen Spannbügel der eingangs genannten Art in einer verbesserten Ausführungsform anzugeben, die sich insbesondere dadurch auszeichnet, dass mit dem Spannbügel mehrere Funktionen der Formgebung und Verdeckstoffspannung in besonders einfacher Ausführung ermöglicht werden.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, dass zum Verschließen und Öffnen einer Dachöffnung ein Faltverdeck vorgesehen ist, das sich vom vorderen Bereich des Windschutzrahmens bis in den Heckbereich unterhalb einer Windschutzscheibe erstreckt. Das Faltverdeck wird vorzugsweise durch einen Verdeckstoff gebildet, der im Öffnungsbereich über dem Fahrgastinnenraum durch quer zur Fahrtrichtung angeordnete Spriegel in Form gehalten wird. Im Heckbereich des Faltverdecks ist eine Heckscheibe in den Verdeckstoff integriert angeordnet, wobei sich der Verdeckstoff im Heckbereich bis in den Seitenbereich nahe der C-Säule beabstandet erstreckt.

Zwischen dem den Fahrgastraum überspannenden Faltverdeck und dem heckseitigen Bereich des Faltverdecks ist ein formgebender Eckspriegel angeordnet, um den der Verdeckstoff oberhalb des Fahrgastraumes in einen schräg nach unten abfallenden Heckbereich umgelenkt wird. In unmittelbarer Nähe des Eckspriegels kann beispielsweise in dem Verdeckstoff oder auf den Verdeckstoff aufgesetzt, ein Dachspoiler mit integrierter Heckleuchte angeordnet sein. Beim Öffnen des Faltverdecks wird an dem Windschutzscheibenrahmen die vordere Begrenzung des Faltverdecks, eine Dachkappe, aus ihrer zum Windschutzscheibenrahmen fixierten Position entriegelt, wobei die Dachkappe mit dem an der Dachkappe befestigten Verdeckstoff über seitliche Dachführungen in den Heckbereich des Fahrzeuges verschoben wird. Beim Erreichen des heckseitigen Endbereichs des Faltverdecks wird das zurückgeschobene und zusammengefaltete Faltverdeck zusammen mit dem Heckbereich über eine entsprechende Kinematik in den tiefer liegenden Heckbereich der Karosserie abgesenkt.

Bis auf die karosserieseitigen Fahrzeugseitenteile, bestehend aus der C-Säule und den Dachseitenholmen, ist das Fahrzeug nun dachseitig und heckseitig geöffnet, wobei die Dachseitenholme über Scharniere beziehungsweise Verriegelungsmechanismen zwischen dem Windschutzscheibenrahmen und der C-Säule herausgenommen genommen werden können. Somit entsteht ein vollwertiges Cabriolet, wobei nur noch die C-Säulen bis nahe der oberen Dachbegrenzung aufragen und dadurch eine Überrollbügel ähnliche Schutzfunktion bieten.

Der Verdeckstoff des Faltverdecks wird im Heckbereich um seitliche, hintere Ecken des Faltverdecks bis an die Hinterkante der C-Säule herangeführt, wobei der Verdeckstoff auf einer im Kantenbereich der C-Säule angebrachten Dichtung aufliegt. Durch diesen seitlichen Umgriff des Verdeckstoffs aus dem Heckbereich bis in die seitlichen Bereiche zur C-Säule angrenzend entsteht der Eindruck, dass es sich bei diesem Fahrzeug um ein vollwertiges Cabriolet-Fahrzeug handelt. Durch den an der Hinterkante der C-Säule anliegenden Verdeckstoff können Teile der C-Säule oder der Dachführung, sowie Halter oder Halterbügel bei geschlossenem Faltverdeck durch den Verdeckstoff überdeckt werden. Die Formgebung eines Verdeckstoffs aus dem Heckbereich umgreifend, in den seitlichen Bereich eines Fahrzeuges, stellt hohe Anforderungen an die Stoffführung und an die Stoffspannung dieses Übergangsbereichs, was zusätzlich dadurch erschwert wird, dass der seitliche Bereich und der Heckbereich des Faltverdecks in die nahezu vertikale Ausrichtung des oberen Bereichs des Faltverdecks überführt werden müssen. Um hier ein ansprechendes Erscheinungsbild zu erreichen, werden der Verdeckstoff im seitlichen und Heckbereich einstückig aus dem oberen Bereich des Faltverdecks ausgebildet. Hierzu kommt weiter erschwerend dazu, dass die Verdeckstoffumlenkung am Eckspriegel andere Abmessungen und Krümmungen aufweist, wie sie im Bereich des Spannbügels, nahe des Öffnungsbereichs der Karosserie aufzeigt. Somit muss der Verdeckstoff nahezu, einer elastischen Folie gleichend, um einen Eckspriegel sowie einen Heckbereich in den seitlichen Bereich des Fahrzeuges überführt und gespannt werden können.

Zwischen der C-Säule und dem Öffnungsbereich der Karosserie, welcher mit der Unterkante des Spannbügels übereinstimmt, bildet sich eine Ecke des Verdeckstoffs aus, die maßgeblich eine saubere Verdeckstoffspannung im seitlichen Heckbereich beeinflusst. Diese Ecke und der seitliche Heckbereich kann nicht in gewohnter Weise von einem Spannspriegel ausreichend zur Erzeugung einer kontinuierlichen Form und Spannung ausgebildet werden. Hierzu ist der Spannbügel als Formteil mit mehrfach gekrümmten und geschweiften Flächen ausgebildet, an diesen der Verdeckstoff, entsprechend mittels geeigneten Verbindungsverfahren angebracht ist. Somit ist es möglich, dass der Spannbügel im seitlichen Heckbereich und im Eckbereich die gewünschte Form des Faltverdecks an dieser Stelle erzeugt und der Verdeckstoff über diesen flächigen Spannbügel formgebend gespannt wird. Ebenso ist es auf diese Art möglich, dass die Ecke des Verdeckstoffs zwischen der C-Säule und dem Öffnungsbereich der Karosserie zuverlässig ausgebildet wird.

Eine weitere Funktion besteht darin, dass zum Öffnen einer nahezu vertikal angeordneten Heckklappe, unterhalb des Faltverdecks, der Spannbügel mit dem an ihm befestigten Verdeckstoff nach oben geschwenkt werden kann, so dass ein Öffnen des Heckbereichs, zur besseren Beladung eines Stauraums möglich wird. Auch übernimmt der Spannbügel bei geöffnetem Faltverdeck, die weitere Funktion, dass der über den Spannbügel angebrachte Verdeckstoff zum abgelegten und gefalteten Faltverdeck eine bestimmte Faltenlage vorgibt und diesen somit während des Öffnungsvorgangs in eine bestimmte Ablageposition zwingt.

Der Spannbügel kann durch die Formübergänge und Spannungsverläufe des Faltverdecks im Heck-, Eck-, und Seitenbereich in seiner flächigen Ausgestaltung sehr aufwändig ausgeformt sein. Zur Herstellung eines solchen Spannbügels bieten sich daher Spritzgussteile aus Leichtmetall oder aus Kunststoff an, an denen der Verdeckstoff beispielsweise über Kleben, Nähen oder sonstigen geeigneten Verbindungsverfahren befestigt wird. Eine gute Befestigung des Verdeckstoffs am Spannbügel ist besonders wichtig, da der Spannbügel beim Beladen des heckseitigen Stauraums geschwenkt werden kann und dabei, sowohl bei geöffnetem wie bei geschlossenem Verdeck, den am Spannbügel angebundenen Verdeckstoff im Bereich seiner Schwenkachse starken Zugbelastungen ausgesetzt ist. Um diese Belastungen möglichst gering zu halten ist es sinnvoll, die Schwenkachse nahe der Hinterkante der C-Säule beziehungsweise im Bereich der Dachführung anzuordnen.

Selbstverständlich kann der Spannbügel über einen Verriegelungsmechanismus relativ zur Fahrzeugkarosserie fixiert und verriegelt werden, wobei bei nach oben geschwenktem Spannbügel, dieser beispielsweise über eine Gasfeder in seiner geöffneten Position gehalten werden kann. Auch können in dem Spannbügel Bremsleuchten oder Innenleuchten für den Stauraum integriert sein, was sich ganz besonders durch die großflächige und großvolumige Ausgestaltung der Eckbereiche des Spannbügels und des mittleren Bereichs des Spannbügels anbietet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht des geschlossenen Faltverdecks mit im seitlichen Heckbereich umgreifenden Verdeckstoff,
- Fig. 2: eine isometrische Ansicht von schräg hinten auf das geschlossene Faltverdeck,
- Fig. 3: eine Seitenansicht auf die Karosserie und den Spannbügel ohne Verdeckstoff,
- Fig. 4: eine isometrische Ansicht von schräg hinten auf den Spannbügel und die Karosserie ohne Verdeckstoff.

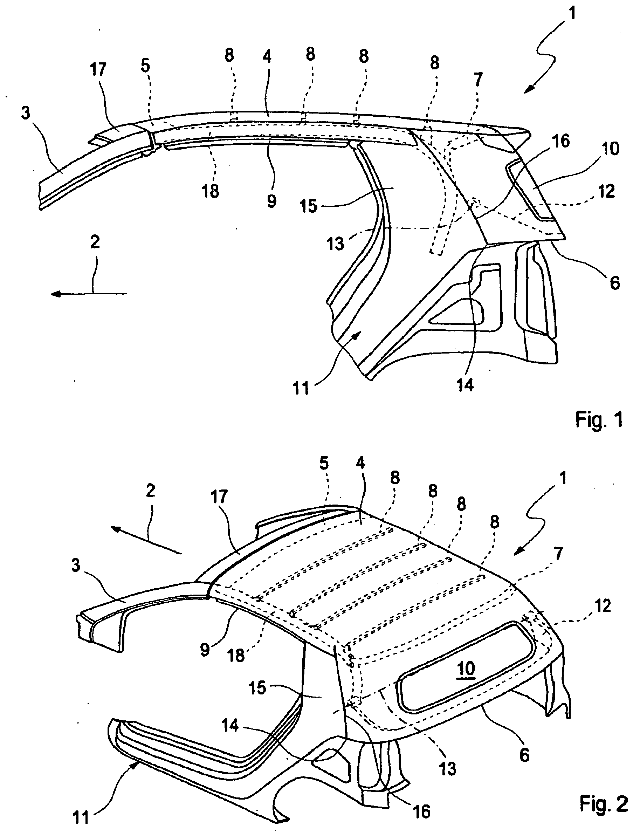

Figur 1 zeigt eine Seitenansicht des geschlossenen Faltverdecks 1 mit im seitlichen Heckbereich umgreifenden Verdeckstoff 4, wobei sich das Faltverdeck 1, ausgehend von einem Windschutzscheibenrahmen 17, in den Heckbereich des Fahrzeugs erstreckt. Der Windschutzscheibenrahmen 17 ist als Querverbindung der A-Säulen 3 zur Aufnahme und Verriegelung des Faltverdecks 1 in geschlossener Position ausgebildet, wobei der Verlauf und die Krümmung des Faltverdecks 1 nahtlos in den Windschutzscheibenrahmen 17, beziehungsweise in die A-Säulen 3 übergeht. Bei geschlossenem Faltverdeck 1 umgreift der Verdeckstoff 4 die seitlichen Dachbereiche bis an die Seitenscheiben reichend, wobei der seitliche Dachbereich durch Dachseitenholme 9 gebildet wird. Die Dachseitenholme 9 sind als Verlängerung der A-Säulen 3 verbindend bis zur C-Säule 15 geführt, wobei auf der zur Dachöffnung weisenden Seite der Dachseitenholme 9 eine Dachführung 18 zum Verschieben des Faltverdecks 1 aus einer geschlossenen in eine offene Position angebracht sind. Bei geöffnetem Faltverdeck 1 können die Dachseitenholme 9 aus ihrer verbindenden Position herausgenommen werden. Hierzu weisen die Dachseitenholme 9 an ihren Enden Verschlüsse beziehungsweise Scharniere auf, welche die Dachseitenholme 9 fest mit dem Windschutzscheibenrahmen 17, beziehungsweise der A-Säule 3 und der C-Säule 15 verbinden. Die im Bereich der Dachseitenholme 9 vorgesehene Dachführung 18 ist entsprechend der Abmessung des herausnehmbaren Dachseitenholms 9 dimensioniert und weist im Trennbereich des Dachseitenholms 9 zur C-Säule 15 einen Übergangsbereich zur heckseitigen Dachführung 18 in der C-Säule auf.

Der, entgegen die Fahrtrichtung 2 weisende Heckbereich des Faltverdecks ist schräg nach unten weisend ausgebildet, wobei er in seinem unteren Bereich durch eine Unterkante eines Spannbügels 12 beziehungsweise dem Öffnungsbereich der Karosserie 11 begrenzt wird. Im Übergangsbereich zwischen dem sich horizontal erstreckenden Faltverdeck 1 und dem Heckbereich des Faltverdecks 1 ist unterhalb des Faltverdecks 1 ein Eckspriegel 7 angeordnet, über den der Verdeckstoff 4 aus der nahezu horizontalen, den Fahrgastraum überspannenden Position, in den schräg nach unten ausgerichteten Heckbereich übergeleitet wird. In diesem Heckbereich kann auf dem Verdeckstoff 4 ein Heckspoiler aufgesetzt sein, wobei es auch möglich ist, dass der Heckspoiler durch den Eckspriegel 7 gebildet wird. Im Heckbereich, entgegen die Fahrtrichtung 2 weisend, ist im Verdeckstoff 4 eine Heckscheibe 10 vorgesehen, die sowohl aus einem transparenten Kunststoff oder einem Glas hergestellt sein kann. Der aus dem Heckbereich in einen seitlichen Fahrzeugbereich überführte Verdeckstoff 4 wird nahe der Hinterkante 16 der C-Säule 15 begrenzt. Hierbei liegt der Verdeckstoff 4 des seitlichen Bereiches auf einer an der C-Säule 15 angebrachten Dichtung auf. Zur Erzeugung der Stoffspannung, sowie zur Formgebung, ist im unteren Heckbereich des Faltverdecks 1 ein Spannbügel 12 vorgesehen, der über die in Figur 2 abgebildeten Schwenkachsen 13 aus seiner dem Faltverdeck 1 entsprechenden geschlossenen Stellung nach oben in eine geöffnete Position geschwenkt werden kann. Der Spannbügel 12 ist hierbei als mehrfach geformter und geschweifter Formbügel ausgebildet, wobei die Form des Spannbügels 12 der gewünschten Form und dem gewünschten Verlauf des Verdeckstoffs 4 im hinteren Eckbereich beziehungsweise dem seitlichen Heckbereich entspricht. Der Verdeckstoff 4 ist hierbei über geeignete Verbindungsverfahren an dem Spannbügel 12 fest angebracht.

Zwischen der Hinterkante 16 und der C-Säule 15 und dem Öffnungsbereich der Karosserie 11 bildet das Faltverdeck 1 eine Ecke 14 aus, die in ihrer Form und Lage bestimmend für die Stoffspannung des heckseitigen Verdeckstoffes 4 wichtig ist. Um hier eine geeignete Befestigung des Verdeckstoffes 4 an der Unterkante des Spannbügels 12 zur gewährleisten, ist der Verdeckstoff 4 in diesem Bereich als Stoffkante 6 ausgebildet. Diese Stoffkante 6 kann einen Keder oder eine sonstige Befestigungshilfe enthalten und ist beispielsweise über spezielle Ausgestaltungen um die Kante des Spannbügels 12 herum geführt. Weiter dient diese Stoffkante 6 als Verstärkung des Verdeckstoffes 4, da diese Kante besonders hohe Zugspannungen bei geschlossenem Faltverdeck 1 ausgesetzt ist.

Ein geschlossenes Faltverdeck 1 in isometrischer Schrägansicht von hinten, ist in Figur 2 dargestellt. Das Faltverdeck 1 erstreckt sich, wie in Figur 1 beschrieben, von einer Dachkappe 5 am Windschutzscheibenrahmen 17 ausgehend, über den Dachöffnungsbereich in den Heckbereich des Fahrzeugs. Um bei geschlossenem Faltverdeck 1 ein Durchhängen des Verdeckstoffes 4 zu verhindern und zur Formgebung des geschlossenen Faltverdeckes 1 sind Spriegel 8 unterhalb des Verdeckstoffes 4 quer zur Fahrtrichtung 2 angeordnet. Diese sind in der Regel über bewegbare Verbindungen mit dem Verdeckstoff 4 verbunden. Auch können diese Spriegel 8 in den Dachführungen 18 verschoben werden, wobei einzelne Spriegel 8 über geeignete Mechanismen, entsprechend eines Faltspriegels aufgestellt und geschwenkt werden können. Der Verdeckstoff 4 wird im hinteren Dachbereich über den Eckspriegel 7 zur Stoffkante 6 des Spannbügels 12 umgelenkt, wobei bei beschlossenem Faltverdeck 1 im hinteren Fahrzeugseitenbereich der Verdeckstoff 4, Dachführungen 18, Kinematiken, Halter oder dergleichen abdecken kann. Über die Schwenkachsen 13 ist es möglich, dass der Spannbügel 12 aus seiner geschlossenen Position, die dem geschlossenen Faltverdeck 1 entspricht, in eine Position nahe dem Eckspriegel 7 geschwenkt werden kann. Die hierbei entstehenden Falten des heckseitigen Verdeckstoffes 4 werden über die Formgebungen und Ausgestaltung des Spannbügels 12 sowie der Positionierung der Schwenkachsen 13 so gesteuert, dass die Heckscheibe 10 in eine vorbestimmte Position schwenkt, ohne dabei durch scheuernden oder drückenden Kontakt mit anderen Dachteilen oder Fahrzeugteilen Schaden nehmen zu können.

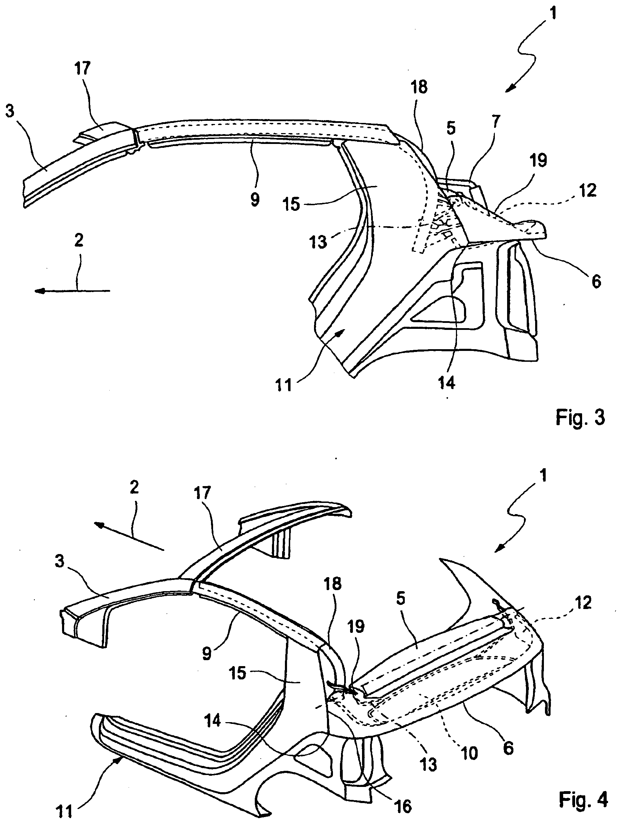

Die Figur 3 zeigt eine Seitenansicht auf die Karosserie 11 und den Spannbügel 12 ohne Verdeckstoff 4. Der Spannbügel 12 ist hierbei auf dem Öffnungsbereich der Karosserie 11 aufliegend, wobei der Spannbügel 12 mittels einer, hier nicht abgebildeten, Verriegelung mit der Karosserie 11 verriegelt sein kann. Entsprechend dem Verlauf der in Fahrtrichtung 2 weisenden Verdeckstoffkante entlang der Hinterkante 16 der C-Säule 15 ist nahe hierzu beabstandet die Schwenkachse 13 mittels eines Halters an der Karosserie 11 beziehungsweise der Dachführung 18 angeordnet. Um diese Schwenkachse 13 schwenkt der Spannbügel 12 dann, wenn der heckseitige Stauraum beladen werden soll und der Spannbügel 12 in eine nach oben geschwenkte Position bewegt wird. Die in Figur 3 abgebildete Position des Spannbügels 12 entspricht seiner Lage bei geöffnetem oder geschlossenem Verdeck, wobei etwa der Verlauf des gefalteten Verdeckstoffs 19 bei geöffnetem Faltverdeck 1 zu erkennen ist. Dieser gefaltete Verdeckstoff 19 verläuft knapp über der Oberkante des Spannbügels 12 so, dass er im Bereich des zusammengefalteten und abgelegten Faltverdecks 1 umgelenkt wird. Das hierbei im Heckbereich abgelegte Faltverdeck 1 wurde entlang der Dachführungen 18 in den Heckbereich verschoben, wobei das Faltverdeck 1 über Spriegel 8 und spezielle Kinematiken in die Ablageposition bewegt wurde. Auch ist in Figur 3 die integrierte Aufnahme der Dachführung 18 in den Dachseitenholm 9 gut zu erkennen. Der Dachseitenholm 9 kann bei Bedarf aus seiner Verriegelung im Bereich des Winschutzscheibenrahmens 17 und der C-Säule 15 heraus gelöst werden, so dass der Dachseitenholm 9 zusammen mit einem Teil der Dachführung 18 entfernt werden kann.

Wie in Figur 3, so ist auch der Figur 4 zu entnehmen, dass der Eckspriegel 7 bei abgelegtem Faltverdeck 1 in das abgelegte Faltverdeck 1 hinein geschwenkt ist, was dazu führt, dass der Verdeckstoff 4 des Faltverdeckes 1 in die Ablageposition über den Eckspriegel 7 gedrückt wird. Auch hier wird der Eckspriegel 7 um einen über das den Ablagebereich bewegende Faltverdeck 1 mit bewegt, wobei es selbstverständlich ist, dass der Eckspriegel 7 über eine eigene Lenkerkinematik aktiv in diese Position geschwenkt werden kann.

Die in Figur 4 dargestellte isometrische Ansicht auf den Spannbügel 12 und der Karosserie 11 ohne Verdeckstoff 4 zeigt die Ablageposition der Heckscheibe 10 bei geöffnetem Faltverdeck 1. Ebenso ist das abgelegte Faltverdeck 1 dargestellt, wobei die Dachkappe 5 abschließend als letztes Element auf dem abgelegten Faltverdeck 1 zum Aufliegen kommt. Hierbei wird sowohl der Verdeckstoff 4, wie auch die Dachkappe 5 relativ zur Dachführung 18 verriegelt. In dieser Position ist es weiterhin möglich, dass der Spannbügel 12 wenigstens teilweise in eine nach oben geschwenkte Position bewegt werden kann. Die spezielle Formgebung des Spannbügels 12 bewirkt bei geöffnetem Faltverdeck 1, dass im seitlichen Eckbereich des Fahrzeugs der Verdeckstoff 4, zumindest teilweise, entsprechend der vorgegebenen Form des Spannbügels 12 positioniert ist, wobei die Ecke 14 des Verdeckstoffes 4 weiterhin präzise ausgebildet wird. Da der größte Teil des Faltverdeckes 1 innerhalb des Aufnahmebereichs des Spannbügels 12 abgelegt ist, wird durch die Formgebung des Spannbügels 12 und des daran befestigten und geführten Verdeckstoffes 4 das abgelegte Faltverdeck 1 im Wesentlichen so verdeckt, dass von außen nur noch der stoffummantelte Spannbügel 12 und die Dachkappe 5 zu erkennen sind. Auch in dieser Position ist der Verdeckstoff 4 im Bereich des Spannbügels 12 an diesem derart befestigt, dass beim Fahren durch den Fahrtwind keine störenden Geräusche des Verdeckstoffs 4 z. B. durch Flattern des Verdeckstoffs 4 entstehen können.

### Bezugszeichenliste

- 1: Faltverdeck
- 2: Fahrtrichtung
- 3: A-Säule
- 4: Verdeckstoff
- 5: Dachkappe
- 6: Stoffkante
- 7: Eckspriegel
- 8: Spriegel
- 9: Dachseitenholm
- 10: Heckscheibe
- 11: Karosserie
- 12: Spannbügel
- 13: Schwenkachse
- 14: Ecke
- 15: C-Säule
- 16: Hinterkante, Dichtkante
- 17: Windschutzscheibenrahmen
- 18: Dachführung
- 19: gefalteter Verdeckstoff

## Patentansprüche

1. Fahrzeug mit einem Windschutzscheibenrahmen (17), Dachführungen (18), Dachseitenholme (9), C -Säulen und einem Faltverdeck (1), umfassend einen Spannbügel (12),
- einen Verdeckstoff (4), der in Fahrtrichtung (2) vorne in eine Dachkappe (5) am Windschutzscheibenrahmen (17) übergeht und hinten an einen Spannbügel (12) befestigt ist,
- wobei der Verdeckstoff (4) des Faltverdecks (1) sich ausgehend vom Windschutzscheibenrahmen (17) bis in den Heckbereich unterhalb einer Heckscheibe (10) erstreckt,
- wobei der Verdeckstoff (4) über seitliche im Bereich von Dachseitenholmen (9) vorgesehene Dachführungen (18) aus einer geschlossenen, den Fahrgastraum überspannende Position, in eine erste geöffnete Position bewegbar ist,
- wobei im Heckbereich des Faltverdecks (1) eine Heckscheibe (10) angeordnet ist und der Verdeckstoff (4) im Heckbereich bei geschlossenem Faltverdeck (1) über Spriegel (7, 8) gespannt wird, und
- wobei der Spannbügel (12) den Verdeckstoff (4) aus dem Heckbereich formgebend in den seitlichen Fahrzeugbereich bis an die Hinterkante (16) der C-Säule (15) heranführt, und
- wobei die Heckscheibe in den Verdeckstoff (4) integriert ausgeführt ist, und
- wobei der Verdeckstoff (4) ausgehend von einer ersten geöffneten Position über heckseitige Dachführungen (18) in der C-Säule in eine im Heckbereich abgelegte Position bewegbar ist.
**dadurch gekennzeichnet,**
- **dass** der Spannbügel (12) den Eckbereich (14) des Verdeckstoffs (4) zwischen der Hinterkante (16) der C-Säule (15) und dem Öffnungsbereich der Karosserie (11) ausbildet, und
- **dass** der Spannbügel (12) der Formgebung des seitlichen Heck- und Eckbereichs folgend, als ein flächiges Formteil aus Kunststoff oder Leichtmetall ausgebildet ist, und
- **dass** der Spannbügel (12) über Schwenkachsen (13) relativ zur Karosserie (11) entgegen der Fahrbahn geschwenkt werden kann.

2. Fahrzeug nach Anspruch 1, **dadurch gekennzeichnet,**
**dass** der Verdeckstoff (4) an dem flächig geformten Spannbügel (12) mittels Kleben, Nähen, Klemmen oder über einen Klettverschluss verbunden ist.

3. Fahrzeug nach Anspruch 1, **dadurch gekennzeichnet,**
**dass** die Schwenkachsen (13) an der Dachführung (18) oder an der C-Säule (15) positioniert sind.

4. Fahrzeug nach Anspruch 1 und 2, **dadurch gekennzeichnet,**
**dass** der Verdeckstoff (4) an der hinteren unteren Kante des Spannbügels (12) über eine Stoffkante (6) befestigt ist.

5. Fahrzeug nach Anspruch 1, **dadurch gekennzeichnet,**
**dass** der Spannbügel (12) über eine Verriegelung in der Position seiner Unterkante auf dem Öffnungsbereich der Karosserie (11) aufliegend fixierbar ist.

6. Fahrzeug nach den Ansprüchen 1, 2 und 4, **dadurch gekennzeichnet,**
**dass** der an der Hinterkante (16) der C-Säule (15) angrenzende Verdeckstoff (4) über den Spannbügel (12) in einer zur C-Säule (15) abdichtenden Position gehalten wird.

7. Fahrzeug nach Anspruch 1, **dadurch gekennzeichnet,**
**dass** die flächige Ausgestaltung des Spannbügels (12) Krümmungen in und/oder quer zur Fahrtrichtung (2) aufweisen, wobei diese Krümmungen kombiniert sein können und zumindest teilweise ineinander übergehend verlaufen.

## Claims

1. Vehicle having a windscreen frame (17), roof guides (18), roof side rails (9), C-pillars and a foldable roof (1), comprising a tensioning bow (12),
- a roof material (4) which merges at the front in the direction of travel (2) into a roof cap (5) on the windscreen frame (17) and is fastened at the rear to a tensioning bow (12),
- wherein the roof material (4) of the foldable roof (1) extends from the windscreen frame (17) into the rear region below a rear window (10),
- wherein the roof material (4) is movable from a closed position spanning the passenger compartment into a first open position via lateral roof guides (18) provided in the region of roof side rails (9),
- wherein a rear window (10) is arranged in the rear region of the foldable roof (1), and, when the foldable roof (1) is closed, the roof material (4) is tensioned in the rear region via hooks (7, 8), and
- wherein the tensioning bow (12) guides the roof material (4) in a shaping manner from the rear region into the lateral vehicle region and as far as the rear edge (16) of the C-pillar (15), and
- wherein the rear window is formed in a manner integrated in the roof material (4), and
- wherein the roof material (4) is movable from a first open position via rearside roof guides (18) in the C-pillar into a position stored in the rear region,
**characterized**
- **in that** the tensioning bow (12) forms the corner region (14) of the roof material (4) between the rear edge (16) of the C-pillar (15) and the opening region of the body (11), and
- **in that** the tensioning bow (12), following the shaping of the lateral rear and corner region, is designed as a two-dimensional shaped part from plastic or light metal, and
- **in that** the tensioning bow (12) can be pivoted relative to the body (11) counter to the carriageway via pivot axes (13).

2. Vehicle according to Claim 1, **characterized in that** the roof material (4) is connected to the two-dimensionally shaped tensioning bow (12) by means of adhesive bonding, sewing, clamping or via a touch-and-close fastener.

3. Vehicle according to Claim 1, **characterized in that** the pivot axes (13) are positioned on the roof guide (18) or on the C-pillar (15).

4. Vehicle according to Claim 1 and 2, **characterized in that** the roof material (4) is fastened to the rear lower edge of the tensioning bow (12) via a material edge (6).

5. Vehicle according to Claim 1, **characterized in that** the tensioning bow (12) is fixable in the position of the lower edge thereof resting on the opening region of the body (11) via a lock.

6. Vehicle according to Claims 1, 2 and 4, **characterized in that** the roof material (4) adjacent to the rear edge (16) of the C-pillar (15) is held via the tensioning bow (12) in a sealing position with respect to the C-pillar (15).

7. Vehicle according to Claim 1, **characterized in that** the two-dimensional configuration of the tensioning bow (12) has curvatures in and/or transversely with respect to the direction of travel (2), wherein said curvatures can be combined and extend in a manner at least partially merging into one another.

## Revendications

1. Véhicule présentant un cadre de pare-brise (17), des guides de toit (18), des longerons latéraux de toit (9), des colonnes C et un toit pliable (1), comprenant un arceau de tension (12),
comprenant une toile de capote (4) qui se prolonge dans la direction de conduite (2) à l'avant par une calotte de toit (5) au niveau du cadre de pare-brise (17) et qui est fixée à l'arrière à un arceau de tension (12),
la toile de capote (4) du toit pliable (1) s'étendant depuis le cadre de pare-brise (17) jusque dans la région arrière en dessous d'une vitre arrière (10), la toile de capote (4) pouvant être déplacée par le biais de guides de toit (18) latéraux prévus dans la région de longerons latéraux du toit (9) depuis une position fermée, recouvrant l'habitacle, dans une première position ouverte,
une vitre arrière (10) étant disposée dans la région arrière du toit pliable (1) et la toile de capote (4) étant tendue dans la région arrière lorsque le toit pliable (1) est fermé par le biais d'arceaux (7, 8) et
l'arceau de tension (12) avançant la toile de capote (4) depuis la région arrière en lui donnant sa forme dans la région latérale du véhicule jusqu'à l'arête arrière (16) de la colonne C (15), et
la vitre arrière étant réalisée de manière intégrée dans la toile de capote (4), et
la toile de capote (4) pouvant être déplacée à partir d'une première position ouverte par le biais de guides de toit du côté arrière (18) dans la colonne C dans une position rangée dans la région arrière,
**caractérisé**
**en ce que** l'arceau de tension (12) constitue la région de coin (14) de la toile de capote (4) entre l'arête arrière (16) de la colonne C (15) et la région d'ouverture de la carrosserie (11), et
**en ce que** l'arceau de tension (12), en suivant la forme de la région arrière et de coin latérale, est réalisé sous forme de pièce formée plane en plastique ou en métal léger et
**en ce que** l'arceau de tension (12) peut être pivoté par le biais d'axes de pivotement (13) par rapport à la carrosserie (11) dans le sens opposé à la route.

2. Véhicule selon la revendication 1,
**caractérisé en ce que**
la toile de capote (4) est connectée à l'arceau de tension (12) de forme plane au moyen d'un collage, d'une couture, d'un agrafage ou par une fermeture à bandes agrippantes.

3. Véhicule selon la revendication 1,
**caractérisé en ce que**
les axes de pivotement (13) sont positionnés au niveau du guide de toit (18) ou au niveau de la colonne C (15).

4. Véhicule selon les revendications 1 et 2,
**caractérisé en ce que**
la toile de capote (4) est fixée à l'arête inférieure arrière de l'arceau de tension (12) par le biais d'une arête en tissu (6).

5. Véhicule selon la revendication 1,
**caractérisé en ce que**
l'arceau de tension (12) peut être fixé par le biais d'un verrouillage dans la position de son arête inférieure en appui sur la région d'ouverture de la carrosserie (11).

6. Véhicule selon les revendications 1, 2 et 4,
**caractérisé en ce que**
la toile de capote (4) adjacente à l'arête arrière (16) de la colonne C (15) est retenue par le biais de l'arceau de tension (12) dans une position de fermeture hermétique par rapport à la colonne C (15).

7. Véhicule selon la revendication 1,
**caractérisé en ce que**
la configuration plane de l'arceau de tension (12) présente des courbures dans et/ou transversalement à la direction de conduite (2), ces courbures pouvant être combinées et se prolongeant au moins en partie les unes dans les autres.
